# EUROPÄISCHE PATENTSCHRIFT

(11) **EP 3 213 616 B1**
(45) Veröffentlichungstag und Bekanntmachung des Hinweises auf die Patenterteilung: **10.07.2019**
(21) Anmeldenummer: 17401018.1
(22) Anmeldetag: 01.03.2017
(51) Int. Cl.: A01C 7/20, A01C 7/08

(54) **SCHEIBENSÄSCHAR**
SEEDING DISC COULTER
SOC DE SEMOIR À DISQUE

(30) Priorität: 04.03.2016 DE 102016103900
(43) Veröffentlichungstag der Anmeldung: 06.09.2017
(73) Patentinhaber: Amazonen-Werke H. Dreyer GmbH & Co. KG, 49205 Hasbergen (DE)
(72) Erfinder: Hamann, Malte, 26131 Oldenburg (DE); Reinke, Wilfried, 26123 Oldenburg (DE); Rodenburg, Lür, 28879 / Grasberg (DE); Feick, Steffen, 28879 / Grasberg (DE)

(56) Entgegenhaltungen:
- EP-A1- 0 732 044
- EP-A2- 2 422 600
- DE-B3-102006 062 328
- DE-C2- 4 419 964

## Beschreibung

Die Erfindung betrifft ein Scheibensäschar gemäß des Oberbegriffes des Patentanspruches 1.

Ein derartiges Scheibensäschar ist in DE 10 2006 062 328 B3 beschrieben. Bei diesem als Art Doppelscheibenschar ausgebildeten Säschar ist das Endstück der Zuführleitung für das Saatgut und/oder Dünger zwischen der aus Stahl gefertigten Hauptscheibe und der aus flexiblem Material gefertigten Nebenscheibe S-förmig verlaufend angeordnet. Beide Scheiben sind drehbar an einem Scharträger angeordnet und V-förmig zueinander angestellt. Durch den S-förmig zunächst von hinten nach vorn umgebogenen und dann nach einem schräg nach vorn geradlinigen Verlaufes und dann wieder nach hinten umgebogenen Endstück der Zuführleitung soll das Saatgut auch bei engen Bauverhältnissen möglichst zielgerichtet in die Säfurche abgegeben werden. Trotz des Mündungsbereiches mit dem relativ großen Ausschnitt in der hinteren Wand des Endstückes der Zuführleitung kann nicht genügend Luft des Förderluftstromes rechtzeitig entweichen, so dass es zu nachteiligen Verwirbelungen des aus dem Mündungsbereich des Endstückes der Zuführleitung austretenden Saatgutes vor und während der Ablage des Saatgutes in der Saatfurche kommt.

Der Erfindung liegt die Aufgabe zu Grunde, pneumatisch über eine Zuführleitung dem Säschar zugeleitetes Material, wie Saatgut und/oder Dünger gebündelt und möglichst ohne Verwirbelungen in der Saatfurche abzulegen.

Diese Aufgabe wird erfindungsgemäß dadurch gelöst, dass die vordere Wand im mittleren Bereich des ersten Kreisbogensegmentes auf der konkaven Seite der Krümmung eine Öffnung mit einer sich daran anschließende nach vorn-unten fortsetzenden Zweigleitung aufweist.

In Folge dieser Maßnahmen wird für den pneumatischen Förderluftstrom die Möglichkeit geschaffen in definierter und begrenzter Weise aus der erfindungsgemäß angeordneten Öffnung in der Krümmung und der sich daran anschließenden nach vorn-unten sich fortsetzenden Zweigleitung des Endstückes zu entweichen. Hierdurch wird eine wesentlich beruhigte und gebündelte Saatgutablage aus dem Mündungsbereich des Endstückes in die Saatfurche in wesentlich verbesserter Weise erreicht. Durch die sich anschließende Saatgutführung lässt sich so eine von dem Förderluftstrom weitgehend unbeeinflusste und definierte Abgaberichtung der Saatkörner und/oder des Düngers zur Ablage in der Saatfurche mit einem gleichmäßigen Auftreffen auf den Furchengrund und letztendlich eine gleichmäßige Tiefenablage der Saatkörner und des Saatgutes erreichen. Durch den integrierten erfindungsgemäßen Luftabscheider wird dafür gesorgt, dass sich der Staudruck in der Zuführleitung trotz einer eventuellen Querschnittsverjüngung nicht erhöht.

Um den teilweise aus der Förderleitung abzuscheidenden Förderluftstrom über die vorbeschriebene und als Luftabscheider wirkende Öffnung im Bereich der ersten Krümmung der Zuführleitung und der sich daran anschließenden Zweigleitung in vorteilhafter Weise im Bereich des Schares nach unten abzuleiten, ist vorgesehen, dass die Zweigleitung mit einem zumindest annähernden 90° Krümmungsbogen an die Öffnung in der Zuführleitung angeschlossen ist und die Mündung der Zweigleitung nach unten weist.

Um einerseits einen Teil des Förderluftstromes aus der Zuführleitung, ohne dass Körner des Saatgutes oder des Düngers über die Öffnung in die Zweigleitung mitgerissen werden, abzuleiten, ist vorgesehen, dass der obere Bereich eines die Zuführleitung und die Zweigleitung trennenden Wandbereichs als eine zur Öffnung hin abgerundete Verdickung ausgebildet ist. Hierdurch ergibt sich in einfacher Weise eine sehr gute Abscheidung eines Teiles des Förderluftstromes in vorgesehener Weise.

In einfacher Weise lässt sich die zur Öffnung hin abgerundete Verdickung dadurch ausgestalten, dass die Verdickung des trennenden Wandbereiches im Querschnitt tropfenförmig ausgebildet ist.

In vorteilhafter Weise ist zur Erzielung der vorgesehenen Trennung des abzuleitenden Förderluftstromes von dem weiterhin in der Zuführleitung zu der Saatfurche zufördernden Saatkörner und/oder Düngerkörner vorgesehen, dass die Krümmung des ersten Kreisbogensegmentes den 1,5- bis 2,5 fachen, vorzugsweise etwa den 2-fachen Krümmungsradius des zweiten Kreisbogensegmentes aufweist, dass das geradlinige Zwischenstück eine Länge aufweist, die zumindest annähernd der Länge der Sehne der äußeren Wand des zweiten Kreisbogensegmentes und zumindest annähernd dem 0,5-fachen der Länge der Sehne der äußeren Wand des ersten Kreisbogensegmentes entspricht.

Hierbei hat sich bei Versuchen, um die erfindungsgemäßen Vorteile zu erreichen, herausgestellt, dass die zur Öffnung hin abgerundete Verdickung des trennenden Wandbereiches einen Radius von 5-7 mm, vorzugsweise 6 mm aufweist.

Um im Mündungsbereich den sich noch in der Zuführleitung zur Förderung des Saatgutes bis zur Saatfurche in der Zuführleitung befindlichen restlichen Förderluftstrom rechtzeitig die Möglichkeit zur Entweichung zu geben, damit die Saatkörner und oder die Düngerkörner in gebündelter und nicht verwirbelter Weise der Saatfurche zugeführt werden, ist vorgesehen, dass die hintere Wand des Endstückes der Zuführleitung im Bereich des geradlinigen Zwischenstücks des Endstückes der Zuführleitung zwischen den beiden Kreisbogensegmenten endet und in ihrem unteren Endungsbereich zur Vergrößerung des Querschnittes des Endstückes der Zuführleitung von der vorderen Wand weggebogen ausgebildet ist.

Ein rechtzeitiges Entweichen des restlichen Förderluftstromes wird dadurch unterstützt, dass die seitlichen Wandbereiche des zweiten Kreisbogensegmentes in einem Abstand zu dem unteren Ende des Endstückes der Zuführleitung enden.

Eine vorteilhafte Ausgestaltung des unteren seitlichen Wandbereiches des zweiten Kreisbogensegmentes wird dadurch erreicht, dass die seitlichen Wandbereiche des zweiten Kreisbogensegmentes von oben nach unten zumindest annähernd über die halbe Länge des zweiten Kreisbogensegmentes verlaufen und mit Abstand vom unteren Ende dieses Kreisbogensegmentes enden.

Hierbei können die seitlichen Wandbereiche des zweiten Kreisbogensegmentes auf ihrer freien Seite bogenförmig in die vordere Wand des zweiten Kreisbogensegmentes auslaufend ausgebildet sein.

Um eine gute Bündelung des Saatgutstromes und/oder Düngerstromes zu erreichen, ist vorgesehen, dass die Zuführleitung des Endstückes im Bereich der Scheiben sich trichterförmig nach unten verjüngt. Diese Verjüngung in der Zuführleitung des Endstückes kann nur durch den als Öffnung in der ersten Krümmung angeordneten als Luftabscheider ausgebildeten Öffnung mit sich daran anschließender Zweigleitung ohne Risiko einer nachteiligen Erhöhung des Staudruckes in der Zuführleitung angeordnet werden. Durch diesen Luftabscheider ist gewährleistet, dass der Staudruck trotz Querschnittsverringerung in der Zuführleitung gering gehalten wird.

Damit sich kein nachteiliger Staudruck in der Zweigleitung aufbauen kann, ist vorgesehen, dass die Zweigleitung von ihrem Krümmungsbogen aus in Richtung ihres Mündungsbereiches in sich erweiternder Weise ausgebildet ist.

Eine vorteilhafte Anordnung des Mündungsbereiches der Zweigleitung lässt sich dadurch erreichen, dass der Mündungsbereich der Zweigleitung oberhalb der Rotationsachse der Scheiben sich befindet.

Um in verbesserter Weise zu verhindern, dass Saatkörner und oder Düngerkörner durch den über die Zweigleitung abgeschiedenen Förderluftstrom mitgerissen werden, ist vorgesehen, dass die zur Öffnung hin abgerundete Verdickung des trennenden Wandbereiches zur Erweiterung des Querschnittes des Endstückes der Zuführleitung im Bereich der Abzweigung der Zweigleitung nach vorn verlaufend abgebogen ist.

Eine vorteilhafte Ausgestaltung der Zuführleitung, um den Saatkörner- und/oder Düngerkörnerstrom zu bündeln, ergibt sich dadurch, dass die Zuführleitung im Bereich der Abzweigung der Zweigleitung als sich nach oben öffnender Trichter ausgebildet ist.

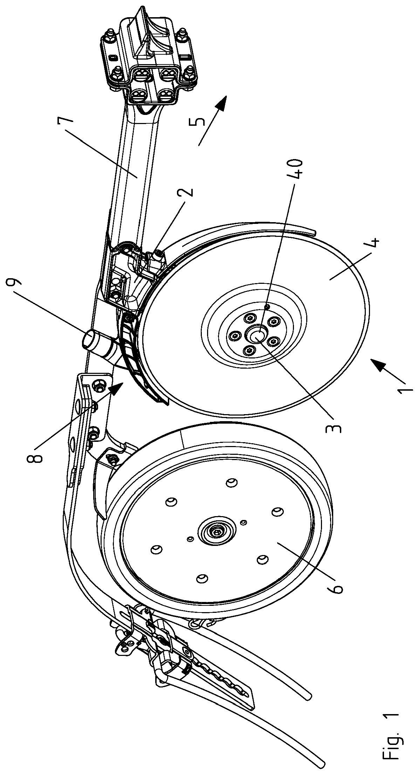

Weitere Einzelheiten der Erfindung sind der Beispielsbeschreibung und den Zeichnungen zu entnehmen. Die Zeichnungen zeigen
- Fig.1: ein erfindungsgemäßes Säschar mit dem Endstück der Zuführleitung in perspektivischer Darstellung,

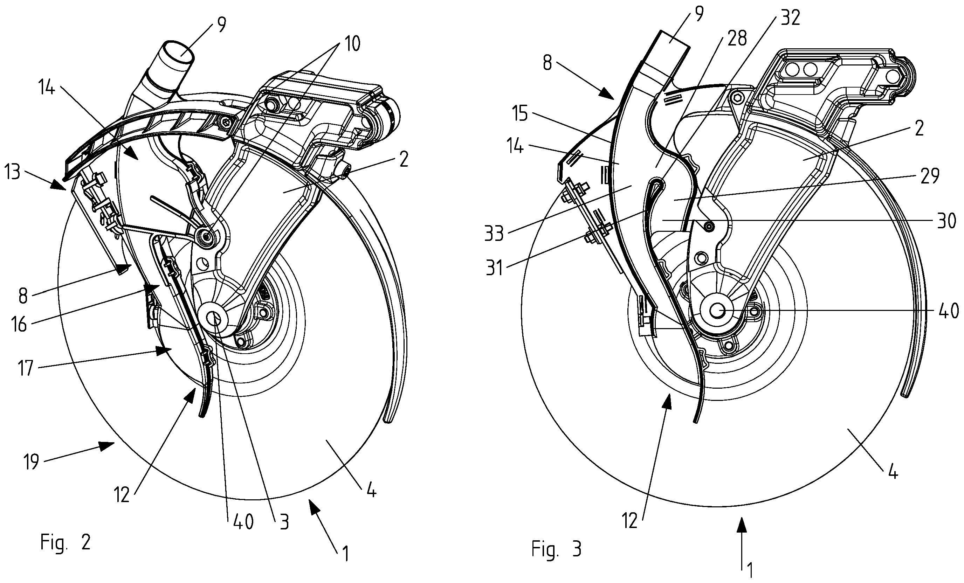

- Fig.2: das Säschar nach Fig.1 in gleicher Darstellungsweise, jedoch in vergrößertem Maßstab, ohne Scharhalter und mit abgenommener rechter Scharscheibe des Doppelscheibenschares,
- Fig.3: das Säschar nach Fig.2 in Seitenansicht und verkleinertem Maßstab, wobei das Endstück der Zuführleitung im Schnitt dargestellt ist,

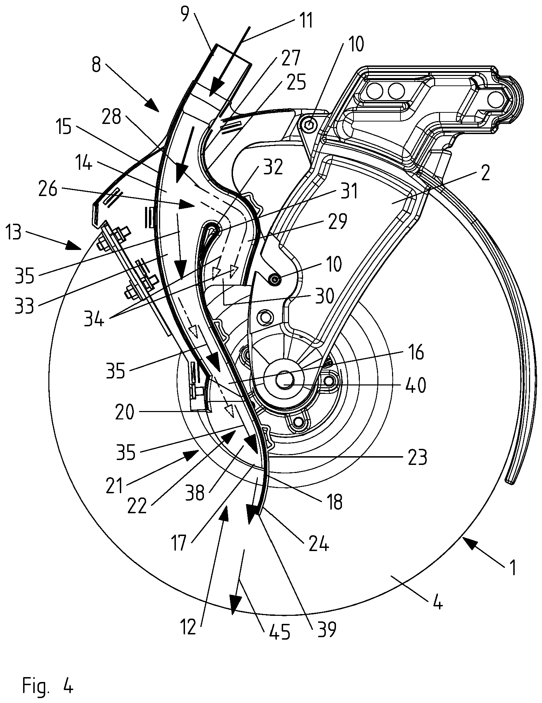

- Fig.4: das Säschar nach Fig.3 mit der eingezeichneter Luftströmung in der Förderleitung in dem Endstück in Seitenansicht und vergrößertem Maßstab,

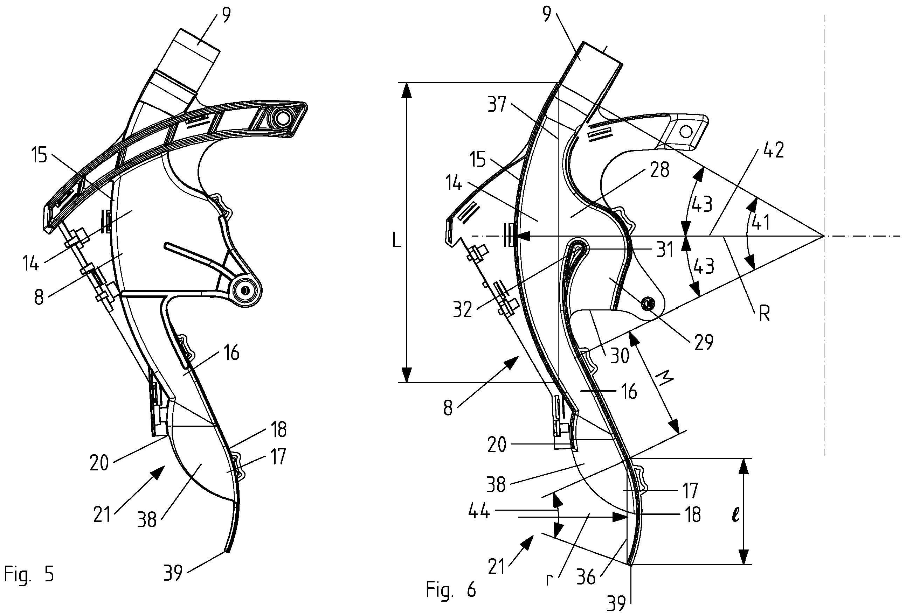

- Fig.5: das im Säschar anzuordnende Endstück der Zuführleitung nach Fig.2 in Seitenansicht und vergrößertem Maßstab und
- Fig.6: das im Säschar anzuordnende Endstück der Zuführleitung nach Fig.5 im Schnitt.

Das Säschar 1 ist als Doppelscheibenschar ausgestaltet und weist einen Scharträger 2 auf, an dem mittels entsprechender Lagerungen 3 zwei Scharscheiben 4 frei drehbar und schräg zur Fahrtrichtung 5 und entgegengesetzt V-förmig zueinander angestellt angeordnet sind. Hinter den beiden Scheiben 4 ist beabstandet zu den Scheiben 4 eine Tiefenführungs- und Saatgutandruckrolle 6 angeordnet. Die Anordnung dieser Rolle 6 ist optional, das Säschar 1 kann auch ohne diese Rolle 6 eingesetzt werden. Das Säschar 1 mit dem Scharträger 2 sind über Scharhaltearme 7 an nicht dargestellten, quer zur Fahrtrichtung 5 verlaufenden Querbalken einer Sämaschine in bekannter Weise angeordnet. Dem Säschar 1 ist das Endstück 8 zumindest einer als Saatgut- und/oder Düngerzuleitung ausgebildeten Zuführleitung 9 zugeordnet. Dieses Endstück 8 ist über Verbindungselementen 10 an dem Scharträger 2 in abnehmbarer Weise angeordnet.

Die Zufuhrleitungen 9 sind an ein nicht dargestelltes Gebläse angeschlossen, welches einen Förderluftstrom 11 erzeugt, so dass sie pneumatisch beaufschlagt sind. In dem Förderluftstrom 11 der Zuführleitung 9 wird in bekannter Weise Saatgut und/oder Dünger in einstellbaren Mengen eingebracht. Über den Förderluftstrom 11 in den Zuführleitungen 9 wird Saatgut und/oder Dünger dem Mündungsabschnitt 12 der Endstücke 8 der Zuführleitungen 9 zugeführt. Der jeweilige Mündungsabschnitt 12 befindet sich in dem unteren Bereich zwischen dem beiden V-förmig zueinander angestellten und drehbar an einem Scharträger 2 angeordneten Scheiben 4.

Das Endstück 8 weist in dem oberen hinteren Viertel 13 der Scheiben 4 ein erstes Kreisbogensegment 14, dessen konvexer Bereich 15 nach hinten weist, auf. An dieses erste Kreisbogensegment 14 des Endstückes 8 der Zuführleitung 9 schließt sich über ein geradlinig und schräg nach vorn-unten verlaufendes Zwischenstück 16 ein zweites, entgegengesetzt zur Krümmung des ersten Kreisbogensegmentes 14 verlaufendes Kreisbogensegment 17, dessen konvexer Bereich 18 in der unteren Hälfte 19 der Scheiben 4 nach vorn weist, an. Die hintere Wand 20 bei dem zweiten Kreisbogensegment 17 des Endstückes 8 der Zuführleitung 9 ist auf der konkaven Seite 21 der Krümmung zur Schaffung einer vergrößerten Öffnung 22 des Endstückes 8 der Zuführleitung 9 nach hinten zumindest teilweise ausgeschnitten. Die vordere Wand 23 des zweiten Kreisbogensegmentes 17 weist auf der konvexen Seite 18 des Kreisbogensegmentes 17 in ihrem Endbereich 24 schräg nach hinten-unten. Die vordere Wand 25 weist im mittleren Bereich 26 des ersten Kreisbogensegmentes 14 auf der konkaven Seite 27 der Krümmung eine Öffnung 28 mit einer sich daran anschließenden nach vorn-unten fortsetzenden Zweigleitung 29 auf.

Diese Zweigleitung 29 ist mit einem zumindest annähernden 90° Krümmungsbogen an die Öffnung 28 in dem Endstück 8 in der Zuführleitung 9 angeschlossen und die Mündung 30 der Zweigleitung 29 weist nach unten.

Die Zuführleitung 9 und die Zweigleitung 29 werden im Bereich der Öffnung 28 durch einen trennenden Wandbereich 31 voneinander getrennt. Der obere Bereich des die Zuführleitung 9 und die Zweigleitung 28 trennenden Wandbereichs 31 ist als eine zur Öffnung 28 hin abgerundete Verdickung 32 ausgebildet. Hierbei ist diese Verdickung 32 des trennenden Wandbereiches 31 im Querschnitt tropfenförmig ausgebildet, wie in den Zeichnungen des Ausführungsbeispiels dargestellt ist. Der verdickte zur Öffnung 28 hin abgerundete Bereich 32 des trennenden Wandbereiches 31 weist einen Radius von 5-7 mm, vorzugsweise 6 mm auf. Zur Schaffung eines trichterförmigen Bereiches 33 ist der verdickte zur Öffnung 28 hin abgerundete Bereich 32 des trennenden Wandbereiches 31 zur Erweiterung des Querschnittes der Zuführleitung 9 im Bereich der Abzweigung der Zweigleitung 29 nach vorn verlaufend abgebogen. Hierdurch wird auch eine bessere Trennung der abzuscheidenden Förderluft 34 (Pfeile) von den in der Zuführleitung 9 des Endstückes 8 verbleibenden Saatkörner und Düngerkörner erreicht, so dass keine nennenswerte Gefahr besteht, dass diese von dem abgeschiedenen Förderluftstrom 34 durch die Öffnung 28 in die Zweigleitung 29 mitgerissen werden. Der restliche Förderluftstrom, der durch die Pfeile 35 dargestellt ist, fördert die Saat- oder Düngerkörner bis zur Säfurche

Zur Schaffung des S-förmigen Verlaufes des Endstückes 8 der Zuführleitung 9 weist die Krümmung des ersten Kreisbogensegmentes 14 den 1,5- bis 2,5 fachen, vorzugsweise etwa den 2-fachen Krümmungsradius r des zweiten Kreisbogensegmentes 17 auf. Der Krümmungsradius des ersten Kreisbogensegmentes 14 ist mit R bezeichnet. Das das erste Kreisbogensegment 14 mit dem zweiten Kreisbogensegment 17 verbindende gradlinige Zwischenstück 16 weist eine Länge M auf, die zumindest annähernd der Länge I der Sehne 36 der äußeren Wand des zweiten Kreisbogensegmentes 17 und zumindest annähernd dem 0,5-fachen der Länge L der Sehne 37 des ersten Kreisbogensegmentes entspricht.

Die hintere Wand 20 des Endstückes 8 der Zuführleitung 9 im Bereich des geradlinigen Zwischenstücks 16 des Endstückes 8 der Zuführleitung 9 endet zwischen den beiden Kreisbogensegmenten 14, 17 und ist in ihrem unteren Endungsbereich zur Vergrößerung des Querschnittes des Endstückes 8 der Zuführleitung 9 von der vorderen Wand 23 weggebogen ausgebildet. Somit ist die Zuführleitung 9 des Endstückes 8 im Bereich der Scheiben 4 sich trichterförmig nach unten verjüngend ausgebildet. Hierdurch ist das Endstück 8 der Zuführleitung 9 im Bereich der Abzweigung der Zweigleitung 29 als sich nach oben öffnender Trichter 33 ausgebildet.

Die seitlichen Wandbereiche 38 des zweiten Kreisbogensegmentes 17 enden in einem Abstand zu dem unteren Ende 39 des Endstückes 8 der Zuführleitung 9.

Des Weiteren verlaufen die seitlichen Wandbereiche 38 des zweiten Kreisbogensegmentes 17 von oben nach unten zumindest annähernd über die halbe Länge des zweiten Kreisbogensegmentes 17 und enden mit Abstand vom unteren Ende 39 dieses Kreisbogensegmentes17. Die seitlichen Wandbereiche 38 des zweiten Kreisbogensegmentes 17 sind auf ihrer freien Seite bogenförmig in die vordere Wand 23 des zweiten Kreisbogensegmentes 17 auslaufend ausgebildet. Weiterhin ist die Zweigleitung 29 von ihrem Krümmungsbogen aus in Richtung ihres Mündungsbereiches 30 in sich erweiternder Weise ausgebildet.

Der Mündungsbereich 30 des Endstückes der Zweigleitung 29 befindet sich oberhalb der Rotationsachse 40 der Scheiben 4.

Die Krümmung des oberen Kreisbogensegmentes 14 verläuft über einen Winkel 41 von etwa 90°, wobei die Winkelhalbierende 42 etwa durch die Mitte der Öffnung 28 und oberhalb des Endes der abgerundeten Verdickung 32 der Trennwand 31 verläuft. Diese Winkelhalbierende 42 teilt den Winkel 41 in die beiden etwa gleich großen Halbwinkel 43.

Die Krümmung des unteren Kreisbogensegmentes 17 verläuft über einen Winkel 44 von etwa 45°.

Durch den gestreckten S-förmigen Verlauf der Zuführleitung 9 im Bereich des Endstückes 8 wird eine gebündelte Abgabe des Saatgutstromes im Mündungsbereich zur Ablage in der von den Scheiben 4 der Säschare 1 geschaffenen Furche erreicht. Die verlangsamte und ruhige Saatgutförderung in Endbereich des Endstückes 8 wird durch Ableitung eines Teiles 34 des Förderluftstromes 11 über die Öffnung 28 und die Zweigleitung 29 erreicht.

Die Saatkörner werden in Pfeilrichtung 45 in Richtung der Säfurche gefördert. Durch die Ausgestaltung der Krümmung des konvexen Bereiches 18 des unteren Kreisbogensegmentes 17 werden die Körner leicht nach schräg hinten, wie durch den Pfeil 45 dargestellt ist, abgegeben. Durch die entsprechende Anordnung der gekrümmten Kreisbogensegmente 14 und 17 in Verbindung mit dem geradlinigen Bereich 16 wird erreicht, dass die Saatkörner sich jeweils auf der Innenwand der äußeren gekrümmten Wände dieser Segmente anlegen und sich so bündeln, am Auslass des Endstückes 8 sie in eine definierte und gleichmäßige Richtung gemäß dem Pfeil 45 in Richtung des Furchengrundes der Furche, die von den Säscharen 1 erzeugt worden ist, gefördert werden und so in die Furche in vorgesehener Weise gelangen. Somit ergibt sich die gewünschte gleichmäßige Tiefenablage der Körner im Boden.

## Patentansprüche

1. Scheibensäschar (1) mit einer pneumatisch beaufschlagten Zuführleitung (9) für Saatgut und/oder Dünger, deren Mündungsabschnitt (12) in dem unteren Bereich zwischen zwei V-förmig zueinander angestellten und drehbar an einem Scharträger (2) angeordneten Scheiben (4) liegt, wobei die Zuführleitung ein Endstück (8) aufweist, welches zumindest in dem oberen hinteren Viertel (13) der Scheiben ein erstes Kreisbogensegment (14), dessen konvexer Bereich (15) nach hinten weist, aufweist, wobei sich an dieses erste Kreisbogensegment (14) des Endstückes (8) der Zuführleitung (9) über ein geradlinig und schräg nach vorn-unten verlaufendes Zwischenstück (16) ein zweites, entgegengesetzt zur Krümmung des ersten Kreisbogensegmentes (14) verlaufendes Kreisbogensegment (17), dessen konvexer Bereich (18) in der unteren Hälfte (19) der Scheiben (4) nach vorn weist, des Endstückes (8) der Zuführleitung (9) anschließt, wobei bei dem zweiten Kreisbogensegment des Endstückes (8) der Zuführleitung die hintere Wand (20) auf der konkaven Seite (21) der Krümmung zur Schaffung einer vergrößerten Öffnung (22) des Endstückes der Zuführleitung nach hinten zumindest teilweise ausgeschnitten ist, wobei die vordere Wand (23) des zweiten Kreisbogensegmentes (17) auf der konvexen Seite (18) des Kreisbogensegmentes (17) in ihrem Endbereich (24) schräg nach hinten-unten weist,**dadurch gekennzeichnet, dass** die vordere Wand (25) im mittleren Bereich (26) des ersten Kreisbogensegmentes (14) auf der konkaven Seite (27) der Krümmung eine Öffnung (28) mit einer sich daran anschließenden nach vorn-unten fortsetzenden Zweigleitung (29) aufweist.

2. Scheibensäschar nach Anspruch 1, **dadurch gekennzeichnet, dass** die Zweigleitung (29) mit einem zumindest annähernden 90° Krümmungsbogen an die Öffnung (28) in der Zuführleitung (9) angeschlossen ist und die Mündung (30) der Zweigleitung (29) nach unten weist.

3. Scheibensäschar nach zumindest einem der vorstehenden Ansprüche, **dadurch gekennzeichnet, dass** der obere Bereich eines die Zuführleitung (9) und die Zweigleitung (29) trennenden Wandbereichs (31) als eine zur Öffnung (28) hin abgerundete Verdickung (32) ausgebildet ist.

4. Scheibensäschar nach Anspruch 3, **dadurch gekennzeichnet, dass** die Verdickung (32) des trennenden Wandbereiches (31) im Querschnitt tropfenförmig ausgebildet ist.

5. Scheibensäschar nach zumindest einem der vorstehenden Ansprüche, **dadurch gekennzeichnet, dass** die Krümmung des ersten Kreisbogensegmentes (14) den 1,5- bis 2,5-fachen, vorzugsweise etwa den 2-fachen Krümmungsradius (r) des zweiten Kreisbogensegmentes (17) aufweist, dass das geradlinige Zwischenstück (16) eine Länge (M) aufweist, die zumindest annähernd der Länge (I) der Sehne (36) der äußeren Wand des zweiten Kreisbogensegmentes (17) und zumindest annähernd dem 0,5-fachen der Länge (L) der Sehne (37) der äußeren Wand des ersten Kreisbogensegmentes (14) entspricht.

6. Scheibensäschar nach zumindest Anspruch 3 und einem der vorstehenden Ansprüche, **dadurch gekennzeichnet, dass** die zur Öffnung hin abgerundete Verdickung (32) des trennenden Wandbereiches (31) einen Radius von 5-7 mm, vorzugsweise 6 mm aufweist.

7. Scheibensäschar nach zumindest einem der vorstehenden Ansprüche, **dadurch gekennzeichnet, dass** die hintere Wand (20) des Endstückes (8) der Zuführleitung (9) im Bereich des geradlinigen Zwischenstücks (16) des Endstückes der Zuführleitung zwischen den beiden Kreisbogensegmenten (14, 17) endet und in ihrem unteren Endungsbereich zur Vergrößerung des Querschnittes des Endstückes der Zuführleitung von der vorderen Wand (23) weggebogen ausgebildet ist.

8. Scheibensäschar nach zumindest einem der vorstehenden Ansprüche, **dadurch gekennzeichnet, dass** die seitlichen Wandbereiche (38) des zweiten Kreisbogensegmentes (17) in einem Abstand zu dem unteren Ende (39) des Endstückes der Zuführleitung enden.

9. Scheibensäschar nach zumindest einem der vorstehenden Ansprüche, **dadurch gekennzeichnet, dass** die seitlichen Wandbereiche (38) des zweiten Kreisbogensegmentes (17) von oben nach unten zumindest annähernd über die halbe Länge des zweiten Kreisbogensegmentes (17) verlaufen und mit Abstand vom unteren Ende (39) dieses Kreisbogensegmentes enden.

10. Scheibensäschar nach zumindest einem der vorstehenden Ansprüche, **dadurch gekennzeichnet, dass** die seitlichen Wandbereiche (38) des zweiten Kreisbogensegmentes (17) auf ihrer freien Seite bogenförmig in die vordere Wand (23) des zweiten Kreisbogensegmentes auslaufend ausgebildet sind.

11. Scheibensäschar nach zumindest einem der vorstehenden Ansprüche, **dadurch gekennzeichnet, dass** die Zuführleitung (9) im Bereich der Scheiben (4) sich trichterförmig nach unten verjüngt.

12. Scheibensäschar nach zumindest einem der vorstehenden Ansprüche, **dadurch gekennzeichnet, dass** die Zweigleitung (29) von ihrem Krümmungsbogen aus in Richtung ihres Mündungsbereiches (30) in sich erweiternder Weise ausgebildet ist.

13. Scheibensäschar nach zumindest einem der vorstehenden Ansprüche, **dadurch gekennzeichnet, dass** der Mündungsbereich (30) der Zweigleitung (29) oberhalb der Rotationsachse (40) der Scheiben (4) sich befindet.

14. Scheibensäschar nach zumindest Anspruch 3 und einem der vorstehenden Ansprüche, **dadurch gekennzeichnet, dass** die zur Öffnung hin abgerundete Verdickung (32) des trennenden Wandbereiches (31) zur Erweiterung des Querschnittes der Zuführleitung (9) im Bereich der Abzweigung der Zweigleitung (29) nach vorn verlaufend abgebogen ist.

15. Scheibensäschar nach zumindest einem der vorstehenden Ansprüche, **dadurch gekennzeichnet, dass** das Endstück (8) der Zuführleitung (9) im Bereich der Abzweigung der Zweigleitung (29) als sich nach oben öffnender Trichter ausgebildet ist.

## Claims

1. Seeding disc coulter (1) with a pneumatically loaded feed line (9) for seed and/or fertilizer, the outlet portion (12) of which feed line (9) lies in the lower region between two discs (4) which are set in a V-shaped manner with respect to each other and are arranged rotatably on a coulter carrier (2), wherein the feed line has an end piece (8) which has a first circular arc segment (14) at least in the upper rear quarter (13) of the discs, the convex region (15) of which circular arc segment (14) points towards the rear, wherein said first circular arc segment (14) of the end piece (8) of the feed line (9) is adjoined via an intermediate piece (16) running rectilinearly and obliquely towards the front and bottom by a second circular arc segment (17) of the end piece (8) of the feed line (9), said second circular arc segment (17) running in an opposed manner with respect to the curvature of the first circular arc segment (14), and the convex region (18) of which second circular arc segment (17) points towards the front in the lower half (19) of the discs (4), wherein, in the second circular arc segment of the end piece (8) of the feed line, the rear wall (20) is at least partially cut out towards the rear on the concave side (21) of the curvature in order to create an enlarged opening (22) of the end piece of the feed line, wherein the front wall (23) of the second circular arc segment (17) points obliquely towards the rear and bottom in its end region (24) on the convex side (18) of the circular arc segment (17), **characterized in that**, in the middle region (26) of the first circular arc segment (14) on the concave side (27) of the curvature, the front wall (25) has an opening (28) with an adjoining branch line (29) which continues towards the front and bottom.

2. Seeding disc coulter according to Claim 1, **characterized in that** the branch line (29) is connected by a curvature arc of at least approximately 90° to the opening (28) in the feed line (9), and the outlet (30) of the branch line (29) points downwards.

3. Seeding disc coulter according to at least one of the preceding claims, **characterized in that** the upper region of a wall region (31) separating the feed line (9) and the branch line (29) is designed as a thickened portion (32) which is rounded towards the opening (28).

4. Seeding disc coulter according to Claim 3, **characterized in that** the thickened portion (32) of the separating wall region (31) is of drop-shaped design in cross section.

5. Seeding disc coulter according to at least one of the preceding claims, **characterized in that** the curvature of the first circular arc segment (14) is 1.5 to 2.5 times, preferably approximately 2 times the radius of curvature (r) of the second circular arc segment (17), **in that** the rectilinear intermediate piece (16) has a length (M) which corresponds at least approximately to the length (L) of the chord (36) of the outer wall of the second circular arc segment (17) and at least approximately to 0.5 times the length (L) of the chord (37) of the outer wall of the first circular arc segment (14).

6. Seeding disc coulter according to at least Claim 3 and one of the preceding claims, **characterized in that** the thickened portion (32) of the separating wall region (31), said thickened portion (32) being rounded towards the opening, has a radius of 5-7 mm, preferably 6 mm.

7. Seeding disc coulter according to at least one of the preceding claims, **characterized in that** the rear wall (20) of the end piece (8) of the feed line (9) ends in the region of the rectilinear intermediate piece (16) of the end piece of the feed line between the two circular arc segments (14, 17) and is formed bent away in its lower end region from the front wall (23) in order to enlarge the cross section of the end piece of the feed line.

8. Seeding disc coulter according to at least one of the preceding claims, **characterized in that** the lateral wall regions (38) of the second circular arc segment (17) end at a distance from the lower end (39) of the end piece of the feed line.

9. Seeding disc coulter according to at least one of the preceding claims, **characterized in that** the lateral wall regions (38) of the second circular arc segment (17) run from the top downwards at least approximately over half the length of the second circular arc segment (17) and end at a distance from the lower end (39) of said circular arc segment.

10. Seeding disc coulter according to at least one of the preceding claims, **characterized in that** the lateral wall regions (38) of the second circular arc segment (17) are formed on their free side so as to taper off in an arc-shaped manner into the front wall (23) of the second circular arc segment.

11. Seeding disc coulter according to at least one of the preceding claims, **characterized in that** the feed line (9) tapers downwards in a funnel-shaped manner in the region of the discs (4).

12. Seeding disc coulter according to at least one of the preceding claims, **characterized in that** the branch line (29) is formed in a widening manner from its curvature arc in the direction of its outlet region (30).

13. Seeding disc coulter according to at least one of the preceding claims, **characterized in that** the outlet region (30) of the branch line (29) is located above the axis of rotation (40) of the discs (4).

14. Seeding disc coulter according to at least Claim 3 and one of the preceding claims, **characterized in that** the thickened portion (32) of the separating wall region (31), said thickened portion (32) being rounded towards the opening, is bent in a manner running forwards in order to widen the cross section of the feed line (9) in the region of the junction of the branch line (29).

15. Seeding disc coulter according to at least one of the preceding claims, **characterized in that** the end piece (8) of the feed line (9) is designed as an upwardly opening funnel in the region of the junction of the branch line (29).

## Revendications

1. Soc de semoir à disque (1), doté d'une conduite d'alimentation (9) chargée pneumatiquement pour de la semence et/ou de l'engrais, dont la section d'embouchure (12) se trouve dans la zone inférieure entre deux disques (4) employés en forme de V l'un par rapport à l'autre et agencés en rotation sur un support de soc (2), dans lequel la conduite d'alimentation comporte un embout (8), lequel comporte, au moins dans le quart supérieur arrière (13) du disque, un premier segment d'arc de cercle (14) dont la région convexe (15) est tournée vers l'arrière, dans lequel, à ce premier segment d'arc de cercle (14) de l'embout (8) de la conduite d'alimentation (9), se raccorde, par le biais d'une pièce intermédiaire (16) s'étendant de manière rectiligne et en diagonale vers l'avant bas, un deuxième segment d'arc de cercle (17) de l'embout (8) de la conduite d'alimentation (9), s'étendant en opposition à la courbure du premier segment d'arc de cercle (14) et dont la région convexe (18) est tournée vers l'avant dans la moitié inférieure (19) des disques (4), dans lequel, près du deuxième segment d'arc de cercle de l'embout (8) de la conduite d'alimentation, la paroi arrière (20) est au moins partiellement découpée vers l'arrière sur la face concave (21) de la courbure pour créer une ouverture agrandie (22) de l'embout de la conduite d'alimentation, dans lequel la paroi avant (23) du deuxième segment d'arc de cercle (17) est tournée, sur la face convexe (18) du deuxième segment d'arc de cercle (17), en diagonale vers l'arrière bas dans son extrémité (24), **caractérisé en ce que** la paroi avant (25) comporte, dans la région médiane (26) du premier segment d'arc de cercle (14), une ouverture (28) dotée d'une conduite dérivée (29) s'y raccordant et continue vers l'avant bas sur la face concave (27) de la courbure.

2. Soc de semoir à disque selon la revendication 1, **caractérisé en ce que** la conduite dérivée (29) est raccordée, avec un arc de courbure au moins proche de 90°, à l'ouverture (28) dans la conduite d'alimentation (9) et l'embouchure (30) de la conduite d'alimentation (29) est tournée vers le bas.

3. Soc de semoir à disques selon au moins une des revendications précédentes, **caractérisé en ce que** la région supérieure d'une région de paroi (31) séparant la conduite d'alimentation (9) et la conduite dérivée (29) est conçue comme un renflement (32) arrondi pour l'ouverture (28).

4. Soc de semoir à disque selon la revendication 3, **caractérisé en ce que** le renflement (32) de la région de paroi (31) de séparation est conçu comme en forme de goutte dans sa section.

5. Soc de semoir à disques selon au moins une des revendications précédentes, **caractérisé en ce que** la courbure du premier segment d'arc de cercle (14) possède de 1,5 à 2,5 fois, de préférence environ 2 fois, le rayon de courbure (r) du deuxième segment d'arc de cercle (17), **en ce que** la pièce intermédiaire rectiligne (16) possède une longueur (M), qui correspond au moins approximativement à la longueur (l) de la corde (36) de la paroi extérieure du deuxième segment d'arc de cercle (17) et au moins approximativement à 0,5 fois la longueur (L) de la corde (37) de la paroi extérieure du premier segment d'arc de cercle (14).

6. Soc de semoir à disques selon au moins la revendication 3 et une des revendications précédentes, **caractérisé en ce que** le renflement (32) arrondi pour l'ouverture de la région de paroi (31) de séparation possède un rayon de 5-7 mm, de préférence 6 mm.

7. Soc de semoir à disques selon au moins une des revendications précédentes, **caractérisé en ce que** la paroi arrière (20) de l'embout (8) de la conduite d'alimentation (9) se termine dans la région de la pièce intermédiaire rectiligne (16) de l'embout de la conduite d'alimentation entre les deux segments d'arc de cercle (14, 17) et est conçue dans son extrémité basse comme s'éloignant de la paroi avant (23) pour agrandir la section de l'embout de la conduite d'alimentation.

8. Soc de semoir à disques selon au moins une des revendications précédentes, **caractérisé en ce que** les régions de paroi latérales (38) du deuxième segment d'arc de cercle (17) se terminent à distance de l'extrémité basse (39) de l'embout de la conduite d'alimentation.

9. Soc de semoir à disques selon au moins une des revendications précédentes, **caractérisé en ce que** les régions de paroi latérales (38) du deuxième segment d'arc de cercle (17) s'étendant du haut vers le bas au moins approximativement sur la moitié de la longueur du deuxième segment d'arc de cercle (17) et se terminent à distance de l'extrémité basse (39) de l'embout de ce segment d'arc de cercle.

10. Soc de semoir à disques selon au moins une des revendications précédentes, **caractérisé en ce que** les régions de paroi latérales (38) du deuxième segment d'arc de cercle (17) sont conçues comme en forme d'arc sur leur face libre et se terminant dans la paroi avant (23) du deuxième segment d'arc de cercle.

11. Soc de semoir à disques selon au moins une des revendications précédentes, **caractérisé en ce que** la conduite d'alimentation (9) se rétrécit vers le bas en forme d'entonnoir dans la région des disques (4).

12. Soc de semoir à disques selon au moins une des revendications précédentes, **caractérisé en ce que** la conduite dérivée (29) est conçue de manière à s'élargir depuis ses arcs de courbure dans la direction de sa région d'embouchure (30).

13. Soc de semoir à disques selon au moins une des revendications précédentes, **caractérisé en ce que** la région d'embouchure (30) de la conduite dérivée (29) se trouve au-dessus de l'axe de rotation (40) des disques (4) .

14. Soc de semoir à disques selon au moins la revendication 3 et une des revendications précédentes, **caractérisé en ce que** le renflement (32) arrondi pour l'ouverture de la région de paroi de séparation (31) est dévié vers l'avant afin d'élargir la section de la conduite d'alimentation (9) dans la région de la dérivation de la conduite dérivée (29).

15. Soc de semoir à disques selon au moins une des revendications précédentes, **caractérisé en ce que** l'embout (8) de la conduite d'alimentation (9) est conçu dans la région de la dérivation de la conduite dérivée (29) comme entonnoir s'ouvrant vers le haut.
